# EUROPEAN PATENT APPLICATION

(11) **EP 4 393 659 A1**
(43) Date of publication of application: **03.07.2024**
(21) Application number: 22383303.9
(22) Date of filing: 28.12.2022
(51) Int. Cl.: B25J 13/08, B25J 15/12

(54) **TACTILE ACTUATOR FOR ROBOT ARMS**

(71) Applicant: Fundación Gaiker, 48170 Zamudio Vizcaya (ES); Fundacion BCMaterial Basque Center for Materials, Applications and Nanostructures, 48940 Bizkaia (ES)
(72) Inventor: Dios Peón, José Ramón, 48170 BIZKAIA (ES); Manchado Sainz Terrones, Juan Carlos, 48170 BIZKAIA (ES); Lanceros Mendez, Senen, 48940 BIZKAIA (ES); Rial Tubio, María del Carmen, 48940 BIZKAIA (ES); Perinka, Nikola, 48940 BIZKAIA (ES); Castro, Nelson, 48940 BIZKAIA (ES)
(74) Representative: Balder IP Law, S.L.

(57) **Abstract**

The invention refers to a tactile actuator for robot arms, comprising: a deformable gripper adapted for its attachment to a robot arm, wherein the gripper is configured to adopt a contracted position for holding an object and an extended position for releasing the object, and at least one force and/or deformation sensor made of a piezoresistive material. The force and/or deformation sensor is attached to a part of the gripper, such that the force and/or deformation sensor is deformable by deformation of that part of the gripper when it adopts the contracted configuration or when it transitions to that configuration. The tactile actuator is capable of grasping an object in any position, and having manipulation capability with high precision in controlling the gripping force of the object.

## Description

### TECHNICAL FIELD

The invention relates to a tactile actuator for robot arms.

An object of the invention is the provision of a tactile actuator capable of grasping an object in any position, and having manipulation capability with high precision in controlling the gripping force applied to the object.

### STATE OF THE ART

The initial stage of the food industry chain, is where there is most manual contact with the food for its selection and where new forms of action are required to avoid an excess of current personal handling and to guarantee quality and safety conditions.

The high pace imposed by the subsequent packaging processes, which are now more automated, requires a high level of manual labour in the initial handling stage.

Situations such as the current pandemic have put the spotlight on the food industry and highlighted the importance of ensuring food quality and safety along the entire value chain, from farm to fork.

In that sense, robotics play an important role, in particular soft robotics is a developing area of robotics that provides soft, conformal, and adaptive gripper and actuators to enable robots to interact with objects in a more adaptive manner than in traditional robotics. For example, a single gripper may adapt to the size, weight, and shape of varying objects in each task, just as the human hand can.

Grippers designed for food, given the great variety of shapes and sizes of food, are developed in materials that are lightweight (so as to avoid inertia at high speeds), economical and customisable to the product to be handled. For this reason, plastic materials that are certified as suitable for food contact are used, which are also susceptible to being developed using Rapid Prototyping and Additive Manufacturing technologies, ideal for the development of small series and easily adaptable to design changes.

Most of these grippers are pneumatically operated. They consist of hollow fingers designed to open or close in response to varying air pressure. More advanced models include electric opening systems. But in force control, only a few developments have been identified for delicate industrial parts, based on strain gauges added after the gripper has been manufactured using adhesives and involving the corresponding external wiring.

In the food sector, this care of the grip is essential for products such as artichokes and certain fruits which are marked with defects when over-tightened. The degree of ripeness is important in terms of the effect of possible damage to be caused. There is even the opportunity to take advantage of the tactile functionality and its quantification to, for example, determine the degree of ripeness by imitating the gesture we humans make with our own hands.

At present, there are no robotic picking grippers with tactile control capable of picking a part in any position and capable of high-precision manipulation in closing force control.

On another note, elastomeric and rigid thermoplastic materials with piezoresistive properties, i.e. materials that vary their electrical resistance when deformed or pressed, are known. Therefore, they are generally polymeric matrices loaded with conductive particles so that they have electrical conductivity and a linear correlation between their deformation and the variation of their electrical resistance.

This capacity as a force and/or deformation sensor inherent to the material, gives it a great application in the development of tactile devices, simplifying the current electronic systems based on the implementation of sensors added later to the material. This facilitates their integration, simplifies the design (which facilitates maintenance and cleaning) and improves automation capabilities.

### DESCRIPTION OF THE INVENTION

The invention relates to the application of new materials and new technologies with tactile functionality that are complementary to existing technologies, such as vision and other digital technologies that allow for greater automation and digitalisation in food handling, in order to ensure food quality and safety. The invention relies on the use of piezoresistive materials, in the development of improved robot grippers for the food industry.

More specifically, the invention refers to a tactile actuator for robot arms, wherein the tactile actuator comprises a deformable gripper adapted for its attachment to a robot arm, and wherein the gripper is configured to adopt a contracted position for holding an object and an extended position for releasing the object.

The tactile actuator further comprises at least one force and/or deformation sensor made of a piezoresistive material, and at least one pair of electrodes connected to the force and/or deformation sensor, so as to be able to measure the electrical resistance of the force and/or deformation sensor.

Preferably, the gripper is made of a plastic material that can be deformed when pressure is exerted on it, for example the gripper and the force and/or deformation sensor, are made of materials suitable for contacting with foodstuffs.

According to the invention, the force and/or deformation sensor is attached to a part of the gripper, such that the force and/or deformation sensor is deformable by deformation of that part of the gripper when it adopts the contracted configuration or when it transitions to that configuration.

The force and/or deformation sensor is made of a polymeric material having particles of conductive material immersed in the material, so that a deformation of the material or a pressure exerted on it, modifies the electrical resistance of the sensor.

This polymeric material may be moulded by additive manufacturing, for example by means of a Fused Deposition Moulding (FDM) process, or by a Direct Ink Writting (DIW) process.

The gripper has at least two deformable and movable fingers to adopt the referred retracted and extended configurations of the gripper. The force and/or deformation sensor is disposed on an external surface of at least one of the fingers or on the inside of one of the fingers.

Additionally, a force sensor arranged at the free ends of at least one of the fingers.

The tactile actuator integrates electronic means communicated with the force and/or deformation sensor through the electrodes, and the electronic means are adapted to process resistance measurements of the force and/or deformation sensor.

Furthermore, the tactile actuator has a base that can be mechanically and electrically connected to the arm of a robot, and the fingers of the gripper are attached at one end to said base and are pivotable with respect to it.

The tactile actuator is provided with actuating means adapted to produce the movement of the gripper to move between the contracted and extended configurations.

Another aspect of the invention refers to an object manipulator robot, comprising a robot arm and the tactile actuator defined above. The robot comprises a control unit communicated with the electronic means of the tactile actuator and with the actuating means of the gripper.

The robot's control unit is adapted to control the actuation of the gripper and the force exerted by the gripper on an object, when the gripper adopts the contracted configuration or when it transitions to that configuration, depending on the deformation or force measured by the force and/or deformation sensor, so that the gripping force applied to an object is controlled very accurately.

Some of the advantages of using piezoresistive material are as follows:
- it can be incorporated into the gripper in the manufacturing process, so that the functionality can be taken into consideration from the design of the gripper itself;
- it can be integrated and embedded in a way that respects a simplified gripper design (no wires, no add-ons) which facilitates cleaning in applications where food handling or health care is required;
- the sensor material applied by additive manufacturing can be selected and formulated in grades suitable and focused for food use;
- it could measure the resistance offered by the material, and thus assess parameters such as degree of maturity and others.

These materials can act as strain sensors, avoiding the current use of strain gauges incorporated into the gripper after its manufacture.

The invention is preferably applied in the food sector, but it is also applicable to other sectors for the manipulation of other products, such as: collaborative robotics and human-machine interaction technologies, fundamental for the development of technologies such as virtual reality.

### BRIEF DESCRIPTION OF THE DRAWINGS

To complete the description and in order to provide a better understanding of the invention, a set of drawings is provided. These drawings form an integral part of the description and illustrate embodiments of the invention, which should not be interpreted as restricting the scope of the invention, but just as examples of how the invention can be carried out. The drawings comprise the following figures:
Figure 1.- shows a schematic representation of the tactile actuator of the invention. The arrows indicate the movement of the gripper and the deformation property of the fingers.
Figure 2.- shows in a perspective view a piece conformed as a clip and made of a piezoresistive material for testing the properties of the same. This figure includes an enlarged view of the clip including a sensor.
Figure 3.- shows the position of the gauge just above the piezoresistive material.
Figure 4.- shows in a graph the comparison of the variation of the force and strain of the gauge.
Figure 5.- shows in a graph a comparison of the variation of the force and the variation of the electrical resistance.
Figure 6.- shows in a graph the calculation of the gauge factor of the PLA sensing material.

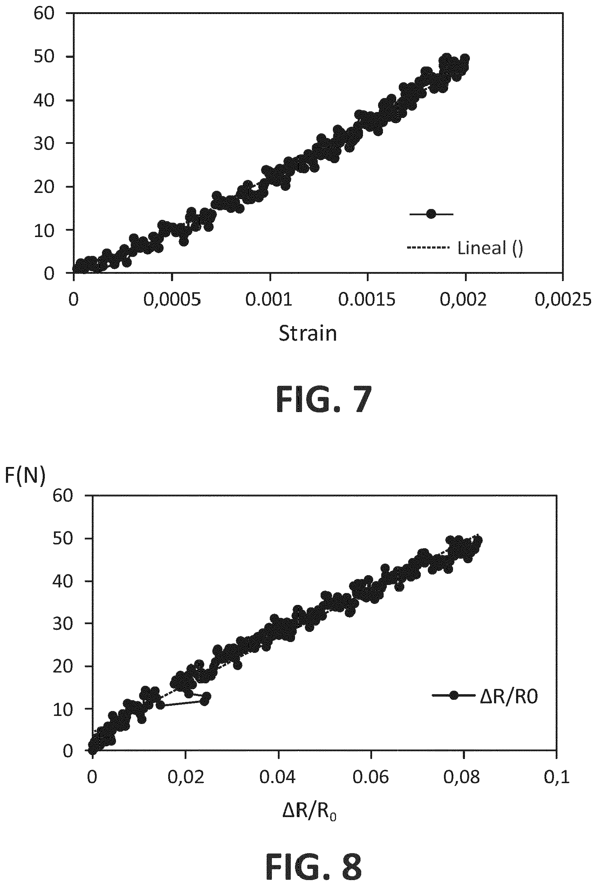

Figure 7.- shows in a graph the correlation in the upstroke (pressure on the device) F/ strain.
Figure 8.- shows in a graph the correlation on rise (pressure on the device) F/ ΔR/R0.

### DESCRIPTION OF WAYS OF CARRYING OUT THE INVENTION

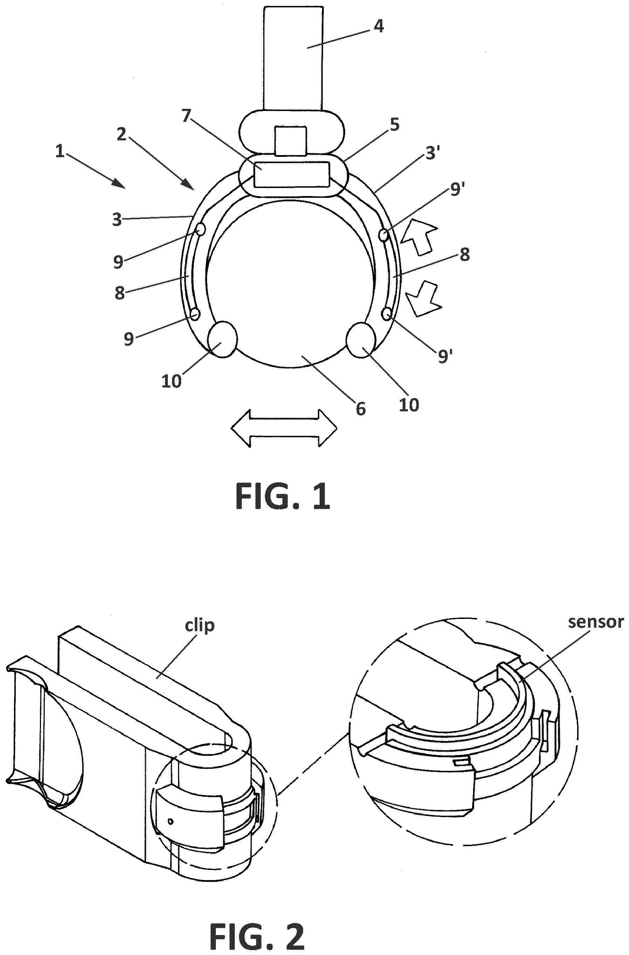

**Figure 1** shows schematically the tactile actuator (1) of the invention, that comprises a deformable gripper (2) composed in this embodiment of two deformable and movable fingers (3,3'), which are pivotally mounted on a base (5) and that are movable to be arranged in a retracted configuration as the one shown in **Figure 1** for holding an object (6), or in an extended configuration for releasing the object (6).

The fingers (3,3') are made of a plastic material that can be deformed when pressure is exerted on it. Additionally, the fingers (3,3') are made of a material that can comply with the structural specifications of the gripper, such as:
a) mechanical properties, of the support material that is adapted to the design needs (connection to the robot arm), drive forces (weights, inertias, ... ) specific to the operation of the arm - gripper assembly. This material can be any type of plastic material (PP, PLA, ABS, ...) depending on the requirements.
b) thermal (for use or cleaning), food contact, ...).

The fingers require maintenance, perhaps the most demanding case are those used in food handling, for which:
1. Food contact degree, a degree determined by regulations is required, not just any material will do, materials that can segregate something that is not permitted into the food are avoided.
2. Disinfectant products are used which must not alter the properties of the materials used in their development, whether structural or sensory.
3. Temperatures above 80°C are used to ensure disinfection. The materials must be unalterable to these periodic treatments.

The tactile actuator (1) in this embodiment has two force and/or deformation sensors (8,8') made of a piezoresistive material, applied on an external surface of the two fingers (3,3') as shown in **Figure 1****,** so that the force and/or deformation sensors (8,8') deform when the respective finger (3,3') deforms, in order to accurately measure the pressure exerted by the gripper (2) on an object (6).

The force and/or deformation sensors (8,8'), are made of an active or sensing material, formulated based on piezoresistive materials. It must meet also the above specifications of the fingers, and also have resistive (variations in electrical resistance due to changes in geometry) or piezoresistive (changes in resistance in addition to the effect due to geometry, also due to changes in volumetric resistivity) sensing properties. The latter add two properties which gives them higher sensitivity or higher gauge factor (GF) (specific property of strain sensors).

The formulation of the piezoresistive sensor material, is adjusted to the performance demanded by each particular application and the rheological requirements for its transformation through the additive printing process. The design, arrangement and geometry of the force and/or deformation sensors (8,8'), is selected so that when the fingers are opened or closed, forces and deformation can be measured.

Each force and/or deformation sensors (8,8'), includes a pair of electrodes (9,9') connected to the force and/or deformation sensor, so as to be able to measure the electrical resistance of the force and/or deformation sensor (8,8').

Alternatively, the force and/or deformation sensors (8,8') can be enclosed inside the respective finger (3,3').

The base (5) is adapted for its attachment to a robot arm (4), and integrates electronic means (7) communicated with the force and/or deformation sensors (8,8') through the electrodes (9,9'), and which are adapted to process resistance measurements of the force and/or deformation sensor.

This electronic means (7) are adapted for adapting and interpreting touch signals, located outside the gripper itself. Physical contact point (connection, plug) of the device (fingers) with the rest of the necessary control or signal management electronics that cannot be incorporated in the claw itself and must be located outside. Such as part of the necessary electronics (amplifiers, signal filters, digitalisation, ...), signal recording elements (file recording), interaction and data representation screens, ... and requires:
(a) External to the tactile gripper and robot arm, therefore requiring a connection system, electronics and software. Cable connection.
(b) Integrated in the gripper itself as a minimum and with a PCB board for signal management and antenna that allows WIFI transmission. Connection without cable.

Optionally, the tactile actuator (1) may incorporates two force sensors (10,10') arranged respectively at the free ends of each finger (3,3'). These force sensors (10,10') act as a modulator of the signal or tactile intensity. Force at a specific point of the material can be measured by registering a certain voltage and, depending on the range of best operation of our sensor, this force can be amplified or mitigated by introducing other materials that act by modulating this signal.

Several tests of the piezoresistive material have been performed, using a testing piece in the form of a clip with the design shown in **Figure 2****,** and with a sensor of piezoresistive material. The testing piece was developed in PLA, the most suitable for compatibility and adhesion is that the sensor material is also developed in PLA base. The piezoresistive PLA-based material is a commercial material for conductive FDM called ProtoPasta.

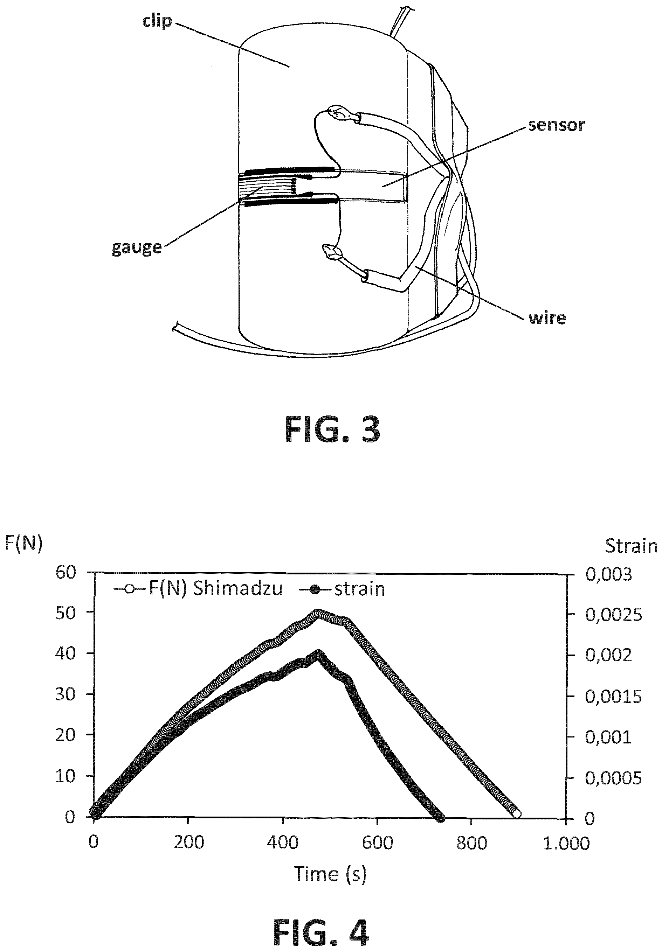

An alternative design of the testing piece is shown in **Figure 3****,** wherein the contact is made on the inside so that on the outside a gauge can be superimposed on the piezoresistive material to control the deformation in the same area by both methods.

The test is carried out:
- from 0 to a load of 50 N. The force level is lowered as the new design is lighter.
- Speed of 1 mm/min.
- Gauge of 6 mm and 120 Ω.
- The initial resistance of the piezoresistive is 1685 Ω.

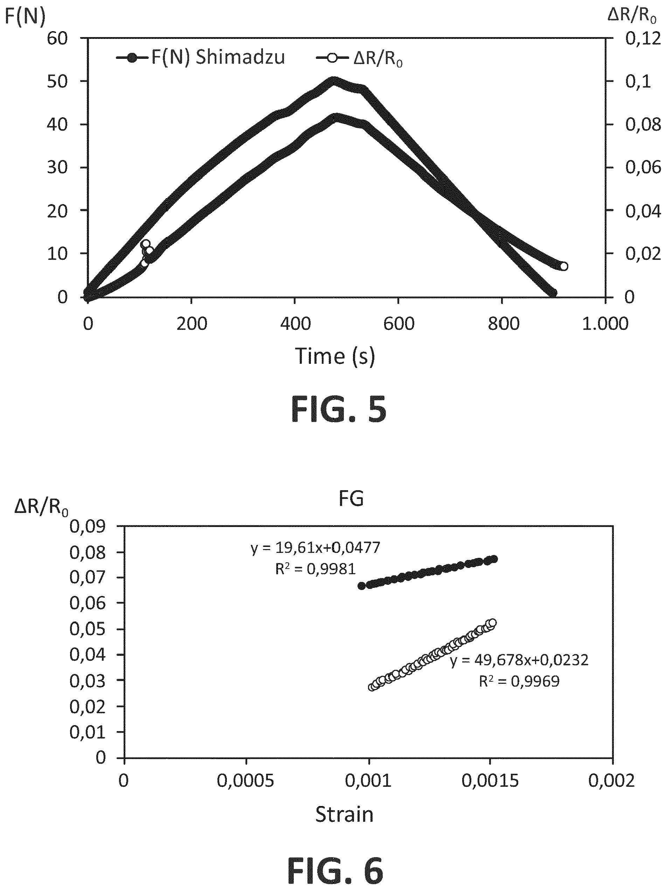

The piece is subjected to a load test from 0 to 50 N in the same way as the gripper, only with the strain gauge, and its mechanical behaviour is determined by analysing:
- The variation of the force and its deformation with time through the gauge, **(****Figure 4****).**
- The variation of the force and the variation of the electrical resistance through the piezoresistive material, **(****Figure 5****).**

It can be seen that at 50 N there is a certain instability in the material, which the gauge registers very well. This instability can also be seen in the recording of the variation of the resistance and it can be seen that it does not return to the initial resistance, possibly due to the usual training that piezoresistive materials usually require.

The FG of the sensor material is calculated based on PLA **(****Figure 6****)** and it is observed:
- In general it presents a high sensitivity being different in the upstroke (FG:50) than in the downstroke (FG:20).
- The FG reaches a value of 50 in the tightening phase (upstroke).

The correlation relationships between F/strain and F/R are both linear.

In order to control the device from the piezoresistive sensor material, the following steps are required:
- It is necessary to determine in the material its FG (ΔR/R0 /ε) and the initial resistance, to connect as well as the gauges to a Wheatstone bridge in ¼ bridge configuration. In this way we can obtain the measured deformation with the piezoresistive material. Theoretically it should be very similar to that measured with the gauge. The R of the bridge has to be adjusted to the initial R value.
- Once the strain measurement is obtained, it is correlated with the F for application in a LabVIEW program.

In this way the piezoresistive material is interrogated by connecting it as if it were a gauge, adjusting the R2 of the bridge to the value of the initial R of the piezoresistive.

Subsequently, a second program "Strain finger continuous R v1.vi" is carried out, in which the deformation is controlled by two methods by the reading of the gauge and the reading of the piezoresistive material. Both readings are translated into force so that the values and graphs for both methods and starting sensor materials can be compared.

## Claims

1. Tactile actuator for robot arms, the tactile actuator comprising:
a deformable gripper adapted for its attachment to a robot arm, wherein the gripper is configured to adopt a contracted position for holding an object and an extended position for releasing the object,
at least one force and/or deformation sensor made of a piezoresistive material,
at least one pair of electrodes connected to the force and/or deformation sensor, so as to be able to measure the electrical resistance of the force and/or deformation sensor, and
wherein the force and/or deformation sensor is attached to a part of the gripper, such that the force and/or deformation sensor is deformable by deformation of that part of the gripper when it adopts the contracted configuration or when it transitions to that configuration.

2. Tactile actuator for robot arms, according to claim 1, where the force and/or deformation sensor is made of a polymeric material having particles of conductive material immersed in the material, so that a deformation of the material or a pressure exerted on it modifies the electrical resistance of the sensor.

3. Tactile actuator for robot arms, according to claim 1 or 2, where the gripper has at least two deformable and movable fingers to adopt the referred retracted and extended configurations of the gripper, and wherein the force and/or deformation sensor is disposed on an external surface of at least one of the fingers or inside of one of the fingers.

4. Tactile actuator for robot arms, according to any of the previous claims, comprising electronic means communicated with the force and/or deformation sensor through the electrodes, and which are adapted to process resistance measurements of the force and/or deformation sensor.

5. Tactile actuator for robot arms, according to claim 3 or 4, comprising a base that can be mechanically and electrically connected to the arm of a robot, and where the fingers of the gripper are attached at one end to said base and are pivotable with respect to it.

6. Tactile actuator for robot arms, according to any of the previous claims, comprising actuating means adapted to produce the movement of the gripper to move between the contracted and extended configurations.

7. Tactile actuator for robot arms, according to any of the claims 3 to 6, comprising force sensors arranged at the free ends of each of the fingers.

8. Tactile actuator for robot arms, according to any of the previous claims, wherein the gripper is made of a plastic material that can be deformed when pressure is exerted on it.

9. Tactile actuator for robot arms, according to any of the previous claims, wherein the gripper and the force and/or deformation sensor are made of materials suitable to be in contact with foodstuffs.

10. Tactile actuator for robot arms, according to claim 2, wherein the polymeric material is moulded by additive manufacturing.

11. Tactile actuator for robot arms according to claim 10, wherein the polymeric material is moulded by fused deposition moulding (FDM) or direct ink writting (DIW).

12. Object manipulator robot, comprising a robot arm and the tactile actuator defined in any one of claims 6 to 9, wherein the robot comprises a control unit communicating with the electronic means of the tactile actuator and with the actuating means of the gripper, and wherein the control unit is adapted to control the actuation of the gripper and the force exerted by the gripper on an object when the gripper adopts the contracted configuration or when it transitions to that configuration, depending on the deformation or force measured by the force and/or deformation sensor.
